# EUROPÄISCHE PATENTANMELDUNG

(11) **EP 4 216 531 A1**
(43) Veröffentlichungstag der Anmeldung: **26.07.2023**
(21) Anmeldenummer: 22153111.4
(22) Anmeldetag: 25.01.2022
(51) Int. Cl.: H04N 1/60

(54) **VERFAHREN ZUM BEDRUCKEN EINER PAPIERBAHN**

(71) Anmelder: SWISS KRONO Tec AG, 6004 Luzern (CH)
(72) Erfinder: PFEIFFER, Sabrina, 16866 Kyritz (DE); DICKE, Sebastian, 16868 Bantikow (DE); GEITZ, Falko, 16845 Zernitz-Lohm (DE); OLDORFF, Frank, 19057 Schwerin (DE)
(74) Vertreter: Gramm, Lins & Partner Patent- und Rechtsanwälte PartGmbB

(57) **Zusammenfassung**

Die Erfindung betrifft ein Verfahren zum Bedrucken einer Papierbahn mit einem Druckmotiv mittels einer Digitaldruckanlage, wobei das Verfahren folgende Schritte aufweist: Bereitstellen eines Referenzdekormusters, das einen Ausschnitt eines digitalen Abbildes des Urmusters des Druckmotivs enthält, Bereitstellen eines hyperspektralen Referenz-Datensatzes zu dem Referenzdekormuster, Drucken eines Exemplars des Referenzdekormusters, Erstellen eines hyperspektralen Datensatzes zu dem gedruckten Exemplar, Vergleichen des erstellten hyperspektralen Datensatzes mit dem bereitgestellten hyperspektralen Referenz-Datensatzmittels einer elektrischen Steuerung, wobei ein Grad der Ähnlichkeit ermittelt wird, Verwenden des Referenzdekormusters beim Bedrucken der Papierbahn mit dem Druckmotiv, wenn der Grad der Ähnlichkeit innerhalb eines vorbestimmten Bereiches liegt, wobei die Position der Druckbreite des Exemplars der Position der Druckbreite des Referenzdekormusters entspricht.

## Beschreibung

Die Erfindung betrifft ein Verfahren zum Bedrucken einer Papierbahn mit einem Druckmotiv mittels einer Digitaldruckanlage, wobei das Verfahren folgende Schritte aufweist:
- Bereitstellen eines Referenzdekormusters, das einen Ausschnitt eines digitalen Abbildes des Urmusters des Druckmotivs enthält,
- Bereitstellen eines hyperspektralen Referenz-Datensatzes zu dem Referenzdekorm uster
- Drucken eines Exemplars des Referenzdekormusters,
- Erstellen eines hyperspektralen Datensatzes zu dem gedruckten Exemplar erstellt wird,
- Vergleichen des erstellten hyperspektralen Datensatzes mit dem bereitgestellten hyperspektralen Referenz-Datensatzes mittels einer elektrischen Steuerung, wobei ein Grad der Ähnlichkeit ermittelt wird,
- Verwenden des Referenzdekormusters beim Bedrucken der Papierbahn mit dem Druckmotiv, wenn der Grad der Ähnlichkeit innerhalb eines vorbestimmten Bereiches liegt.

Papierbahnen werden für unterschiedlichste Zwecke mit einem Druckmotiv bedruckt. Sie werden beispielsweise verwendet, um Paneele oder Platten herzustellen, die beispielsweise als Fußbodenbeläge, Wandverkleidungen, Deckenverkleidungen oder Möbelplatten verwendet werden können. Insbesondere bei der Herstellung von Fußbodenpaneelen ist es erwünscht und von großem Vorteil, wenn die mit dem Druckmotiv bedruckten Papierbahnen keine farblichen Unterschiede zueinander aufweisen. Dies ist insbesondere dann der Fall, wenn zu unterschiedlichen Zeitpunkten Paneele mit dem gleichen Dekor hergestellt werden und so zu diesen unterschiedlichen Zeitpunkten verschiedene Papierbahnen mit dem gleichen Dekor bedruckt werden. Um hier eine Reproduzierbarkeit und Farbtreue zu erreichen, ist es aus dem Stand der Technik bekannt, ein Referenzdekormuster zu hinterlegen. Dieses enthält einen Ausschnitt eines digitalen Abbildes eines Urmusters eines Druckmotivs, sowie weitere Informationen, die beispielsweise zur Steuerung der Digitaldruckanlage verwendet werden. Diese können beispielsweise Farbeinstellungen, Auftragsmengen und/oder andere Parameter der Digitaldruckanlage beinhalten. Das Referenzdekormuster enthält vorliegend vorzugsweise die Steuerdatei, mit der die Digitaldruckanlage angesteuert wird.

Zusätzlich wird ein hyperspektraler Referenz-Datensatz zu dem Referenzdekormuster bereitgestellt. Um den hyperspektralen Referenz-Datensatz zu erstellen, wurde zunächst das Referenzdekormuster verwendet, um ein Exemplar zu drucken. Dieses wurde dann hyperspektral erfasst. Dazu wird beispielsweise ein hyperspektrales Messgerät, insbesondere ein hypersprektrales Flächenmessgerät manuell oder automatisiert verwendet. Die Messdaten dieses Messgerätes sind hyperspektrale Messdaten, aus denen Lab/LCH Werte und die entsprechenden Farbräume errechnet werden können.

Es wurde folglich eine Papierbahn mit einem Druckmotiv bedruckt und anschließend beispielsweise einer Qualitätskontrolle unterzogen. Die Papierbahn und das darauf aufgedruckte Druckmotiv wurden für gut befunden. Um in der Lage zu sein, auch zu einem späteren Zeitpunkt weitere Papierbahnen mit dem Druckmotiv zu bedrucken, und den gleichen visuellen Eindruck zu erreichen, wurde einerseits das Referenzdekormuster erstellt, in dem die Druckparameter, die bei der Herstellung der bedruckten Papierbahn verwendet wurden, gespeichert sind. Damit sind die verwendeten Parameter in elektronischer Form hinterlegt und können bei einer späteren erneuten Produktionsaufnahme erneut verwendet werden. Da diese Parameter und das Referenzdekormuster allein nicht ausreichend sind, um die Reproduzierbarkeit des visuellen Eindruckes sicherzustellen, wird zudem von der bedruckten Papierbahn der hyperspektrale Referenz-Datensatz erstellt. Wenn man so will, ist in diesem Datensatz der visuelle hyperspektrale Eindruck gespeichert.

Das Druckmotiv kann beispielsweise ein Holzpaneel, eine Fliese oder mehrere Fliesen, oder ein Fantasiebild sein, von dem zunächst ein digitales Abbild erstellt werden muss. Von diesem digitalen Abbild wird ein Ausschnitt erzeugt, der als Referenzdekormuster hinterlegt wird. Dies geschieht beispielsweise in einem elektronischen Datenspeicher.

Soll nun eine Papierbahn mit dem Druckmotiv bedruckt werden, muss sichergestellt werden, dass die richtigen Farbwerte und Farbeinstellungen verwendet werden, um mit der Digitaldruckanlage eine bedruckt Papierbahn zu erzeugen, deren Dekor dem Urmuster des Druckmotivs möglichst gut, vorzugsweise perfekt, entspricht. Dazu wird ein Exemplar des hinterlegten Referenzdekormusters auf die Papierbahn gedruckt. Während das Referenzdekormuster also ein digitales Element ist, ist das Exemplar des Referenzdekormusters ein Teil der bedruckt Papierbahn. Da beim Bedrucken der Papierbahn das Referenzdekormuster verwendet wird, ist sichergestellt, dass die gleichen Druckparameter verwendet werden, die seinerzeit verwendet wurden, um die für gut befundene bedruckte Papierbahn herzustellen. Anschließend wird zu dem gedruckten Exemplar ein hyperspektraler Datensatz erstellt.

Mittels einer elektrischen Steuerung, vorzugsweise einer elektronischen Datenverarbeitungseinrichtung wird nun der so erstellte hyperspektrale Datensatz mit dem bereitgestellten hyperspektralen Referenz-Datensatz verglichen. Dafür sind unterschiedliche Verfahren und Vorgehensweisen aus dem Stand der Technik bekannt. Wichtig ist, dass ein Grad der Ähnlichkeit, der auch als Ähnlichkeitsgrad bezeichnet wird, ermittelt wird.

Liegt der so ermittelte Grad der Ähnlichkeit innerhalb des vorbestimmten Bereichs, ist die Ähnlichkeit zwischen dem hyperspektralen Datensatz und dem hyperspektralen Referenz-Datensatz also groß genug, wird das Referenzdekormuster beim Bedrucken der Papierbahn verwendet und die Produktion kann gestartet werden. Der vorbestimmte Bereich ist vorzugsweise durch einen vorbestimmten Grenzwert bestimmt, der eine untere Grenze des vorbestimmten Bereiches definiert. Überschreitet der Grad der Ähnlichkeit diesen vorbestimmten Grenzwert, beispielsweise 95%, liegt der Grad der Ähnlichkeit innerhalb des vorbestimmten Bereiches. Der vorbestimmte Grenzwert kann auch bei 93%, 96%, 97% oder einem anderen Wert liegen.

Diese Art Verfahren sind aus dem Stand der Technik bekannt. Dennoch kommt es zu Abweichungen des Druckmotivs auf der Papierbahn von dem Referenzdekormuster. Der Erfindung liegt daher die Aufgabe zugrunde, diese Abweichungen zu reduzieren oder gänzlich zu beheben.

Die Erfindung löst die gestellte Aufgabe durch ein Verfahren gemäß dem Oberbegriff des Anspruchs 1, das sich dadurch auszeichnet, dass die Position der Druckbreite des Exemplars der Position der Druckbreite des Referenzdekormusters entspricht.

Der Erfindung liegt die Erkenntnis zugrunde, dass die Digitaldruckanlage selbst Einfluss auf das Dekor, das auf die Papierbahn aufgedruckt wird, haben kann. So können beispielsweise Druckköpfe unterschiedlich drucken oder die Gleichmäßigkeit des Druckes über die Druckbreite der Digitaldruckanlage nicht optimal eingestellt sein. Vereinfacht ausgedrückt bedeutet dies, dass sich gedruckte Exemplare des Referenzdekormusters selbst bei gleichen Farbeinstellungen unterscheiden können, nur weil sie an unterschiedlichen Positionen der Druckbreite der Digitaldruckanlage gedruckt werden. Um eine möglichst optimale Vergleichbarkeit des erstellten hyperspektralen Datensatzes mit dem bereitgestellten hyperspektralen Referenz-Datensatz zu ermöglichen wird die Position der Druckbreite des Exemplars so gewählt, dass sie der Position der Druckbreite des Referenzdekormusters entspricht.

Das Referenzdekormuster enthält einen Ausschnitt aus dem digitalen Abbild des Urmusters des Druckmotivs. Dieser Ausschnitt hat eine Position innerhalb des digitalen Abbildes, die durch Angabe einer Längenposition und einer Breitenposition identifiziert werden. Die Breitenposition bildet die Position der Druckbreite des Referenzdekormusters. Das Referenzdekormuster beinhaltet vorzugsweise einen echten Ausschnitt aus dem Urmuster. Dies bedeutet, dass ein Teil des Urmusters nicht durch das Referenzdekormuster abgebildet wird. Das gedruckte Exemplar des Referenzdekormusters zeigt in diesem Fall also nicht das gesamte Druckmotiv, sondern nur einen Teil davon. Dies ist von Vorteil, aber nicht notwendig. Das Referenzdekormuster kann auch das gesamte Abbild des Urmusters beinhalten. In diesem Fall zeigt das gedruckte Exemplar das gesamte Druckmotiv.

Wenn das Referenzdekormuster beim Bedrucken der Papierbahn verwendet wird, wird natürlich das gesamte Druckmotiv auf die Papierbahn gedruckt, auch wenn das Referenzdekormuster lediglich einen Ausschnitt des Druckmotivs abbildet. Das Referenzdekormuster wird dann soweit ergänzt, dass das gesamte Druckmotiv gedruckt werden kann.

Vorzugsweise werden für den Fall, dass der Grad der Ähnlichkeit nicht innerhalb des vorbestimmten Bereiches liegt, mehrere Exemplare des Referenzdekormusters mit unterschiedlichen Farbeinstellungen gedruckt, wobei zumindest einige der Exemplare auf der gleichen Position der Druckbreite gedruckt werden. Vorzugsweise werden alle Exemplare auf der gleichen Position der Druckbreite gedruckt, besonders bevorzugt der Position der Druckbreite des Referenzdekormusters entspricht. Besonders bevorzugt werden dann jeweils hyperspektraler Datensätze für jedes der gedruckten Exemplare bestimmt und diese mit dem hyperspektralen Referenz-Datensatz verglichen. Dabei wird jeweils ein Grad der Ähnlichkeit ermittelt. Vorteilhafterweise wird dann das Exemplar ausgewählt, dessen hyperspektraler Datensatz die höchste Ähnlichkeit mit dem hyperspektralen Referenz-Datensatz aufweist. Die diesem Exemplar zugrunde liegenden Farbwerte werden dann zum Bedrucken der Papierbahn mit dem Druckmotiv verwendet.

Vorzugsweise werden die unterschiedlichen Farbeinstellungen durch die elektrische Steuerung ausgewählt. Dazu ist es von Vorteil, wenn die elektrische Steuerung nicht nur den Grad der Ähnlichkeit der beiden hyperspektralen Datensätze bestimmt, sondern auch unterschiedliche Arten und Stärken von Abweichungen und/oder Unterschieden zwischen ihnen erkennt. Dazu kann eine Bilderkennungssoftware und/oder eine Bildverarbeitungssoftware verwendet werden. Auf der Grundlage dieser erkannten Abweichungen und/oder Unterschiede schlägt die elektrische Steuerung Farbwerte vor oder wählt Farbwerte aus. Diese sind dabei vorzugsweise so gewählt, dass die erkannten Abweichungen und/oder Unterschiede möglichst ausgeglichen und vermindert werden.

In einer bevorzugten Ausgestaltung werden alle Exemplare des Referenzdekormusters auf der gleichen Position der Druckbreite der Digitaldruckanlage gedruckt. Damit können die Einflüsse der Druckanlage auf den Druck noch besser unterbunden und verhindert werden.

In einer bevorzugten Ausgestaltung entspricht die Position der Druckbreite der Position der Druckbreite des Referenzdekormusters. Das Referenzdekormuster enthält lediglich einen Ausschnitt des digitalen Abbildes des Urmusters des Druckmotivs. Es ist nicht notwendig, dass vollständige digitale Abbild des Urmusters des Druckmotivs, das später auf die Papierbahn aufgedruckt werden soll, als Referenzdekormuster zu verwenden und zu hinterlegen. Dies hätte zur Folge, dass die Mehrzahl der gedruckten Exemplare des Referenzdekormusters die vollständigen digitalen Abbilder des Urmusters enthält, was einen erhöhten Platzbedarf und Tintenverbrauch zur Folge hätte. Um dies zu vermeiden wird nur ein Teil, nämlich ein Ausschnitt, des digitalen Abbildes des Urmusters als Referenzdekormuster verwendet.

Wird das vollständige digitale Abbild gedruckt, wird der Ausschnitt an einer bestimmten Position der Druckbreite der Digitaldruckanlage gedruckt. Es ist daher von Vorteil, wenn auch die gedruckten Exemplare des Referenzdekormusters, aus deren digitalen Abbilder die Vergleichsdekormuster erstellt werden, an der gleichen Position der Druckbreite der Digitaldruckanlage gedruckt werden, um auch hier den Einfluss der Digitaldruckanlage an sich möglichst auszuschließen.

In einer bevorzugten Ausgestaltung wird zusätzlich zu dem Referenzdekormuster, dem es sich um ein digitales Element handelt, auch ein gedrucktes Referenzexemplar des Referenzdekormusters bereitgestellt. Das Referenzexemplar ist ein mit dem Referenzdekormuster gedrucktes Stück einer Papierbahn. Sowohl das Referenzexemplar als auch das Referenzdekormuster werden in dieser bevorzugten Ausgestaltung bereitgestellt und stehen zur Verfügung, um die Qualität der Vergleichsdekormuster zu bestimmen. Das gedruckte Exemplar wird vorzugsweise imprägniert und auf einem Kern, der beispielsweise eine Holzwerkstoffplatte sein kann, verpresst. Dies geschieht vorzugsweise gemeinsam mit dem Referenzexemplar. Das Referenzexemplar steht folglich von einem früheren Druckvorgang zur Verfügung und wird am Beginn des Verfahrens der hier beschriebenen Art gemeinsam mit dem digitalen Referenzdekormuster bereitgestellt. Es wird dann mit dem gedruckten Exemplar, das im Laufe des vorliegenden Verfahrens gedruckt wird, gemeinsam imprägniert und verpresst.

Vorzugsweise werden das Referenzexemplar und das gedruckte Exemplar vor dem Verpressen in jeweils mehrere, vorzugsweise wenigstens drei, Teile aufgeteilt, wobei das Referenzexemplar und das gedruckte Exemplar vorzugsweise gleich aufgeteilt werden. Die verschiedenen Teile können dann gemischt und zu sogenannten Mischexemplaren zusammengesetzt werden. Ein Mischexemplar ist folglich eine Papierbahn oder ein Stück davon, die aus mehreren Teilen zusammengesetzt ist, die gemeinsam ein gedrucktes Exemplar des Referenzdekormusters zeigen.

Vorzugsweise werden die imprägnierten und verpressten Exemplare miteinander verglichen, um die Farbtreue und Reproduzierbarkeit zu überprüfen. Dies gelingt besonders einfach, wenn Mischexemplare hergestellt und miteinander verglichen werden. Doch auch wenn das Referenzexemplar und das gedruckte Exemplar jeweils als Ganzes imprägniert und auf einem Kern verpresst werden, lässt sich der Vergleich durchführen. Dies kann beispielsweise dadurch geschehen, dass ein Betreiber des Verfahrens die beiden Exemplare ansieht und miteinander vergleicht. Alternativ oder zusätzlich dazu kann der Vergleich auch elektronisch geschehen. Dazu werden sowohl von dem Referenzexemplar als auch von dem gedruckten Exemplar oder von den jeweiligen Mischexemplaren digitale Abbilder, vorzugsweise in Form eines hyperspektralen Datensatzes, erzeugt, die dann mittels der elektrischen Steuerung, vorzugsweise elektronischen Datenverarbeitungseinrichtung miteinander verglichen werden.

Bevorzugt weist das Bereitstellen des Referenzdekormusters folgende Schritte auf:
- Erzeugen eines digitalen Abbildes eines Gegenstandes, den das Druckmotiv nachbilden soll,
- Erstellen eines Farbmusterdekors, das einen Ausschnitt des Abbildes des Gegenstandes enthält,
- Drucken einer Mehrzahl von Exemplaren des Farbmusterdekors mit unterschiedlichen Farbeinstellungen,
- Imprägnieren und Verpressen der Exemplare des Farbmusterdekors auf einem Kern
- Vergleichen der imprägnierten und verpressten Exemplare mit dem Gegenstand und
- Auswählen eines imprägnierten und verpressten Exemplares auf der Basis des Vergleiches und Erzeugen des Referenzdekormusters aus dem ausgewählten Exemplar.

In einer bevorzugten Ausgestaltung werden zum Vergleichen der imprägnierten und verpressten Exemplare mit dem Gegenstand jeweils digitale Abbilder, vorzugsweise in Form hyperspektraler Datensätze, erzeugt, die miteinander verglichen werden.

Vorzugsweise werden die Exemplare der Farbmusterdekore auf der gleichen Position der Druckbreite der Digitaldruckanlage gedruckt.

Um das Verfahren durchführen zu können, wird vorzugsweise zunächst die Entwicklung eines digitalen Dekors für die Ausgabe auf ein digitales Ausgabegerät, beispielsweise eine Digitaldruckanlage, für eine Wandverkleidung, einen Bodenbelag, eine Deckenverkleidung oder Möbel beispielsweise aus einem Echtmaterial durchgeführt. Dazu werden digitale Daten, die aus einem Scan oder einem Fotografieren der Vorlage erhalten werden, verwendet. Die verschiedenen digitalen Daten werden dann retuschiert, korrigiert und/oder in Einzelteilen mittels einer Bildbearbeitungssoftware zusammengesetzt. Auf diese Weise entsteht ein "Rapport", der in eine Ausgabe oder die Vorlage eingesetzt wird. Er beinhaltet vorzugsweise Markierungen für die Ausgabe, beispielsweise Cutmarken, Richtungspfeile, Dekornummern und/oder Passerkreuze. Übliche Größen für einen solchen Rapport sind beispielsweise zwischen 110 cm mal 205 cm bis 200 cm mal 205 cm, auch wenn größere Größen möglich sind. Ein solcher Rapport ist ein digitales Abbild des Urmusters.

Anschließend wird vorzugsweise ein Ausschnitt als Referenzausschnitt in einem Farbmusterdekor verwendet. Die Größe dieses Referenzausschnittes beträgt vorzugsweise zwischen dem Format DIN A4 und DIN A1, besonders bevorzugt zwischen DIN A4 und DIN A2, besonders bevorzugt DIN A3.

Die nächsten Schritte dienen bevorzugt der Freigabe der Farbeinstellungen des Referenzdekormusters. Damit soll eine Farbeinstellung erreicht werden und ein digitales Abbild erzeugt werden, das als gedrucktes Exemplar möglichst gut dem Urmuster entspricht. Dazu werden mehrere, vorzugsweise mindestens vier Exemplare des Farbmusterdekors gedruckt. Dabei werden unterschiedliche Farbeinstellungen verwendet, die beispielsweise unterschiedliche Farbwerte, unterschiedliche Tinten und/oder unterschiedliche Primer beinhalten können. Vorzugsweise werden die jeweiligen Exemplare imprägniert und auf einem Kern verpresst. Der Vergleich mit einem entsprechenden Referenzexemplar, das vorzugsweise gleichzeitig imprägniert und verpresst wird, findet bevorzugt bei unterschiedlichen Lichtverhältnissen und Lichtarten, beispielsweise D50, D60, Mischlicht und/oder Tageslicht statt. Durch den Vergleich mit dem Urmuster wird das Referenzdekormuster ermittelt und als Grundlage des weiteren Verfahrens verwendet.

Die Farbeinstellung des Referenzdekormusters wird in die Produktionsdatei übernommen. Aus dieser wird, sofern gewünscht, ein Referenzdekormuster erstellt, das ein anderer Ausschnitt sein kann, als der, der bisher verwendet wurde. Mehrere Exemplare des Farbmusterdekors werden vorzugsweise auf der gleichen Position der Druckbreite der Digitaldruckanlage gedruckt, wobei unterschiedliche Farbeinstellungen verwendet werden. Diese beinhalten Parameter, wie Tinte oder Primer, die variiert werden können.

Von den so erzeugten gedruckten Exemplaren des Farbmusterdekors werden digitale Abbilder erzeugt. Dazu wird beispielsweise ein hyperspektrales Flächenmessgerät manuell oder automatisiert verwendet. Die Messdaten dieses Messgerätes sind hyperspektrale Messdaten, aus denen Lab/LCH Werte errechnet werden können. Die Umrechnung von hyperspektralen Datensätzen und die Bestimmung eines Grades der Ähnlichkeit sind dem Fachmann bekannt. Die aktuellen Messdaten werden mit denen des Referenzdekormusters mittels Software in der elektrischen Steuerung verglichen und es wird ein Ähnlichkeitsgrad mittels Software aus hyperspektralen Messdaten errechnet. Dieser kann beispielsweise als Prozent-Angabe ausgegeben werden oder in Form einer Formel vorliegen.

Bevorzugt weist das Referenzdekormuster wenigstens eine Markierung, insbesondere wenigstens eine Positionsmarke und/oder wenigstens eine Steuermarkierung, auf. Diese kann eine Positionsmarke beinhalten, die beispielsweise zum Positionieren eines hyperspektralen Messgerätes verwendet wird. Die Markierung kann auch eine Steuermarkierung enthalten, mit der Informationen an eine spätere Bearbeitungsstation, beispielsweise eine Laminiereinheit, übermittelt werden und die zum Betreiben und/oder Steuern der Bearbeitungsstation verwendet werden. Diese Informationen können die für die Imprägnierung und/oder Konfektionierung der bedruckten Papierbahn verwendet werden.

Vorzugsweise erfolgt das Erstellen des hyperspektralen Datensatzes zu dem gedruckten Exemplar mittels einer Aufnahmeeinrichtung vorzugsweise innerhalb der Digitaldruckanlage. Dadurch wird eine zusätzliche außerhalb der Digitaldruckanlage positionierte Einrichtung, mit der der hyperspektrale Datensatz aufgenommen wird, unnötig und die Anlage benötigt weniger Bauraum. Zudem wird das Verfahren beschleunigt und es kann einfacher und schneller auf Fehler reagiert werden. Dadurch wird die Menge an Ausschuss reduziert.

Bevorzugt werden zusätzlich zu dem Exemplar des Referenzdekormusters Vergleichsexemplare bei unterschiedlichen Farbeinstellungen gedruckt werden, wobei vorzugsweise das Exemplar beim Bedrucken der Papierbahn verwendet wird, das den größten Grad der Ähnlichkeit aufweist. Für jedes dieser gedruckten Exemplare wird ein hyperspektraler Datensatz erstellt, der mit dem bereitgestellten hyperspektralen Referenz-Datensatz verglichen wird.

In einem konkreten Ausführungsbeispiel werden bei einem Hersteller für Laminatfußbodenpanelen Dekore mittels einer Inkjet-Papierdigitaldruckanlage mit Inline-Primerauftrag auf Dekorpapier hergestellt. Für die Farbausmusterung und Produktion werden digitale Druckdaten in einer Auflösung von mind. 300 dpi benötigt. Bei der Neuaufnahme eines Nussbaum-Holzdekors werden mittels eines hochauflösenden Scanners 20 verschiedene Echtholzbretter gescannt oder auf andere Weise digitalisiert. Diese Daten werden mittels Software zu einem Format von 205x140cm so retuschiert, dass Maserung und Aufteilung harmonisch aussehen und freigegeben werden. Für die Ausmusterung der Farbe wird aus dieser Datei an einer festgelegten,Position ein A3-Auschnitt entnommen und als eine neue Ausmusterungsdatei gespeichert. In dieser werden mittels Software so oft Farbversionen erstellt und auf der Papierdigitaldruckanlage gedruckt, dann imprägniert, getrocknet und auf einer HDF-Platte verpresst, bis visuell die Farbversion 26 für die Kollektion ausgewählt wird. Bei der Ausgabe der Farbversionen werden jeweils zwei Muster aus dem Andruck ausgeschnitten. Eines wird wie beschrieben imprägniert, getrocknet und auf einer HDF-Platte verpresst, um eine visuelle Freigabe von Version 26 bzw. dem "fertigen" Produkt inklusive Weiterverarbeitung zu erhalten. Das zweite Muster wird bei Freigabe dann dafür verwendet, um dieses mit einem hyperspektralen Messgerät zu vermessen. Diese Messung wird als Referenzdekormuster gespeichert.

Außerdem werden die Farbeinstellungen von Version 26 aus der Ausmusterungsdatei in die vollumfängliche Produktionsdatei übernommen und gespeichert. Weiterhin wird eine kleinere Datei (Vergleichsdatei) mit dem festgelegten A3 Ausschnitt erstellt und gespeichert, die der Farbversion 26 Produktionsdatei und dem Ausschnitt des Referenzdekormusters entspricht. Beim ersten Produktionsauftrag des Nussbaumdekors (beispielsweise 10 Tage später) wird als erstes die Vergleichsdatei gedruckt und ohne Weiterverarbeitung mit einem hyperspektralen Messgerät eingemessen. Mittels Software wird ein Ähnlichkeitswert von 92,6 % zum Referenzdekormuster ermittelt. Die Toleranz für das Nussbaumdekor wurde auf mind. 95% festgelegt. Anhand der Messwerte und der berechneten Unterschiede in den L,a,b,C,H und Kontrast-Werten werden in einer Nachmusterungsdatei auf Basis der freigegebenen Farbstellung weitere Farbveränderungen mittels Software erstellt und auf der Papierdigitaldruckanlage ausgegeben und hyperspektral vermessen, bis die Version 26-8 einen Ähnlichkeitsgrad von 97,4% erreicht. Diese Farbveränderungen werden dann wiederum die Produktionsdatei übernommen und ebenfalls eine neue Vergleichsdatei für den Produktionsstart erstellt. Nun stehen für die nächste Produktion bzw. den vorherigen Andruck der Vergleichsdatei bereits 2 Farbversionen für den Ähnlichkeitsvergleich bereit. Stichprobenartig werden die Vergleichsdrucke >95% (Produktionsbereit) auch noch imprägniert, getrocknet und auf einer HDF-Platte verpresst, um eine zusätzliche visuelle Kontrolle für den Produktionsstart zu erhalten.

In einem zweiten konkreten Ausführungsbeispiel werden bei einem Hersteller für Laminatfußbodenpanelen Dekore mittels einer Inkjet-Papierdigitaldruckanlage mit Inline-Primerauftrag auf Dekorpapier hergestellt. In dieser Anlage ist ein hyperspektrales Farbmessgerät Inline verbaut. Für die Farbausmusterung und Produktion werden digitale Druckdaten in einer Auflösung von mind. 300 dpi benötigt. Bei der Neuaufnahme eines Eiche-Holzdekors werden mittels eines hochauflösenden Scanners 14 verschiedene Echtholzbretter gescannt und so digitalisiert. Diese Daten werden mittels Software zu einem Format von 205x130cm so retuschiert, dass Maserung und Aufteilung harmonisch aussehen und freigegeben werden. Für die Ausmusterung der Farbe wird aus dieser Datei an einer festgelegten Position ein A3-Auschnitt entnommen und als eine neue Ausmusterungsdatei gespeichert. In dieser werden mittels Software so oft Farbversionen erstellt und auf der Papierdigitaldruckanlage gedruckt, imprägniert, getrocknet und auf einer HDF-Platte verpresst, bis visuell die Farbversion 19 für die Kollektion ausgewählt wird.

Außerdem werden die Farbeinstellungen von Version 19 aus der Ausmusterungsdatei in die vollumfängliche Produktionsdatei übernommen und gespeichert. Beim Andruck dieser werden in diesem Fall an 4 markanten Positionen Inline hyperspektrale Referenzmuster/Referenzdatensätze erstellt und gespeichert. Zu Beginn des ersten Produktionsauftrag des Eichendekors (17 Tage später) wird die Produktionsdatei angedruckt und Inline mit einem hyperspektralen Messgerät an den 4 markanten Positionen vermessen und Vergleichsmuster gespeichert. Mittels Software wird im mittel ein Ähnlichkeitswert von 94,5% zu den jeweiligen Referenzdekormustern berechnet. Die Toleranz für das Eichendekor wurde auf mind. 93% festgelegt. Das Dekor kann produziert und ein Qualitätszertifikat auf Basis der Messdaten erstellt werden.

## Patentansprüche

1. Verfahren zum Bedrucken einer Papierbahn mit einem Druckmotiv mittels einer Digitaldruckanlage, wobei das Verfahren folgende Schritte aufweist:
- Bereitstellen eines Referenzdekormusters, das einen Ausschnitt eines digitalen Abbildes des Urmusters des Druckmotivs enthält,
- Bereitstellen eines hyperspektralen Referenz-Datensatzes zu dem Referenzdekormuster
- Drucken eines Exemplars des Referenzdekormusters,
- Erstellen eines hyperspektralen Datensatzes zu dem gedruckten Exemplar,
- Vergleichen des erstellten hyperspektralen Datensatzes mit dem bereitgestellten hyperspektralen Referenz-Datensatzmittels einer elektrischen Steuerung, wobei ein Grad der Ähnlichkeit ermittelt wird,
- Verwenden des Referenzdekormusters beim Bedrucken der Papierbahn mit dem Druckmotiv, wenn der Grad der Ähnlichkeit innerhalb eines vorbestimmten Bereiches liegt,
**dadurch gekennzeichnet, dass** die Position der Druckbreite des Exemplars der Position der Druckbreite des Referenzdekormusters entspricht.

2. Verfahren nach Anspruch 1, **dadurch gekennzeichnet, dass** für den Fall, dass der Grad der Ähnlichkeit nicht in dem vorbestimmten Bereiches liegt, mehrere Exemplare des Referenzdekormusters mit unterschiedlichen Farbeinstellungen gedruckt werden, wobei zumindest einige der Exemplare auf der gleichen Position der Druckbreite gedruckt werden, wobei vorzugsweise die Farbeinstellungen durch die elektrische Steuerung ausgewählt werden.

3. Verfahren nach Anspruch 1 oder 2, **dadurch gekennzeichnet, dass** zusätzlich zu dem Referenzdekormuster auch ein gedrucktes Referenzexemplar des Referenzdekormusters bereitgestellt wird, das gemeinsam mit einem gedruckten Exemplar imprägniert und auf einem Kern verpresst wird.

4. Verfahren nach Anspruch 3, **dadurch gekennzeichnet, dass** das Referenzexemplar und das gedruckte Exemplar vor dem Verpressen jeweils in mehrere, vorzugsweise drei, Teile geteilt werden und zu Mischexemplaren zusammengesetzt werden.

5. Verfahren nach einem der vorstehenden Ansprüche, **dadurch gekennzeichnet, dass** das Bereitstellen des Referenzdekormusters folgende Schritte aufweist:
- Erzeugen eines digitalen Abbildes eines Gegenstandes, den das Druckmotiv nachbilden soll,
- Erstellen eines Farbmusterdekors, das einen Ausschnitt des Abbildes des Gegenstandes enthält,
- Drucken einer Mehrzahl von Exemplaren des Farbmusterdekors mit unterschiedlichen Farbeinstellungen,
- Imprägnieren und Verpressen der Exemplare des Farbmusterdekors auf einem Kern
- Vergleichen der imprägnierten und verpressten Exemplare mit dem Gegenstand und
- Auswählen eines imprägnierten und verpressten Exemplares auf der Basis des Vergleiches und Erzeugen des Referenzdekormusters aus dem ausgewählten Exemplar.

6. Verfahren nach Anspruch 5, **dadurch gekennzeichnet, dass** zum Vergleichen der imprägnierten und verpressten Exemplare mit dem Gegenstand jeweils digitale Abbilder erzeugt werden, die miteinander verglichen werden.

7. Verfahren nach Anspruch 5 oder 6, **dadurch gekennzeichnet, dass** die Exemplare der Farbmusterdekore auf der gleichen Position der Druckbreite der Digitaldruckanlage gedruckt werden.

8. Verfahren nach Anspruch 7, **dadurch gekennzeichnet, dass** die Position der Druckbreite der Exemplare des Farbmusterdekore der Position der Druckbreite der Exemplare des Referenzdekormusters entspricht.

9. Verfahren nach einem der vorstehenden Ansprüche, **dadurch gekennzeichnet, dass** das Referenzdekormuster wenigstens eine Markierung, insbesondere wenigstens eine Positionsmarke und/oder wenigstens eine Steuermarkierung, aufweist.

10. Verfahren nach einem der vorstehenden Ansprüche, **dadurch gekennzeichnet, dass** das Erstellen des hyperspektralen Datensatzes zu dem gedruckten Exemplar mittels einer Aufnahmeeinrichtung vorzugsweise innerhalb der Digitaldruckanlage erfolgt.

11. Verfahren nach einem der vorstehenden Ansprüche, **dadurch gekennzeichnet, dass** zusätzlich zu dem Exemplar des Referenzdekormusters Vergleichsexemplare bei unterschiedlichen Farbeinstellungen gedruckt werden, wobei vorzugsweise das Exemplar beim Bedrucken der Papierbahn verwendet wird, das den größten Grad der Ähnlichkeit aufweist.
